# FASCICULE DE BREVET EUROPEEN

(11) **EP 3 716 294 B1**
(45) Date de publication et mention de la délivrance du brevet: **31.08.2022**
(21) Numéro de dépôt: 20165649.3
(22) Date de dépôt: 25.03.2020
(51) Int. Cl.: H01B 7/02, G02B 6/44

(54) **CÂBLE ÉLECTRIQUE ÉQUIPÉ D'AU MOINS UN CAPTEUR SANS FIL**
ELEKTROKABEL, DAS MIT MINDESTENS EINEM DRAHTLOSEN SENSOR AUSGESTATTET IST
ELECTRIC CABLE PROVIDED WITH AT LEAST ONE WIRELESS SENSOR

(30) Priorité: 26.03.2019 FR 1903158
(43) Date de publication de la demande: 30.09.2020
(73) Titulaire: Nexans, 92400 Courbevoie (FR)
(72) Inventeur: POULIN, Nicolas, 62138 Auchy-les-Mines (FR)
(74) Mandataire: Ipsilon

(56) Documents cités:
- WO-A2-2008/066811
- JP-A- 2005 347 138
- US-B1- 9 774 147
- Anonymous: "Researchers Develop New Type of 3D Printed Wearable Antenna - 3DPrint.com | The Voice of 3D Printing / Additive Manufacturing", , 7 octobre 2017 (2017-10-07), XP055651066, Extrait de l'Internet: URL:https://3dprint.com/190220/3d-printed- wearable-antenna/ [extrait le 2019-12-10]

## Description

La présente invention se rapporte à un câble électrique équipé d'au moins un capteur sans fil.

L'invention appartient au domaine des câbles électriques communicants.

Pour faire communiquer des capteurs sans fil intégrés dans un câble électrique, il est nécessaire de prévoir un dispositif d'émission et/ou de réception tel qu'une antenne, dans le câble ou à proximité de celui-ci.

Néanmoins, lorsqu'une seule antenne est prévue, il est impossible de garantir qu'elle sera positionnée correctement lors de l'installation du câble.

Ainsi, il peut arriver que des capteurs intégrés dans un câble deviennent inutilisables en raison d'une mauvaise réception du signal qu'ils émettent.

La qualité de l'émission et de la réception est donc un point crucial lors de l'intégration de composants électroniques sans fil dans un câble.

La présente invention a pour but de remédier aux inconvénients précités de l'art antérieur. Un exemple de câble avec une antenne intégrée se trouve dans le document WO2008/066811.

Dans ce but, la présente invention propose un câble électrique comportant au moins un élément émetteur sans fil et/ou récepteur sans fil de signaux, comportant en outre une pluralité d'antennes d'émission et/ou de réception situées sur une couche électriquement isolante prédéterminée du câble, l'au moins un élément émetteur sans fil et/ou récepteur sans fil communiquant par l'intermédiaire d'au moins une antenne de la pluralité d'antennes, remarquable en ce que chaque antenne de la pluralité d'antennes est orientée différemment.

Le fait de prévoir plusieurs antennes au lieu d'une seule permet de maximiser la probabilité qu'au moins une des antennes soit correctement orientée, ce qui maximise la probabilité d'émettre et/ou de recevoir des signaux de bonne qualité.

Une telle répartition multidirectionnelle des antennes augmente encore les chances d'avoir une antenne bien orientée et donc, d'émettre et/ou de recevoir des signaux de qualité satisfaisante.

Dans un mode particulier de réalisation, la pluralité d'antennes est réalisée par impression au moyen d'une encre conductrice.

Cela permet de conserver un encombrement du câble quasiment égal à celui d'un câble sans antennes.

Dans un mode particulier de réalisation, la pluralité d'antennes est recouverte d'une couche électriquement isolante.

Cela permet de protéger la pluralité d'antennes contre le risque d'abrasion.

Dans un mode particulier de réalisation, la couche électriquement isolante prédéterminée du câble est la paroi extérieure du câble.

Dans un autre mode particulier de réalisation, la couche isolante prédéterminée est un ruban disposé autour d'une autre couche du câble.

Le fait de déporter les antennes sur la paroi extérieure du câble ou sur un ruban permet d'éloigner les antennes du métal contenu dans le ou les conducteurs du câble et donc de moins parasiter l'émission et la réception.

Dans un mode particulier de réalisation, la pluralité d'antennes comporte quatre antennes disposées en « X ».

Cet agencement des antennes permet d'obtenir une couverture très large en émission et en réception moyennant la présence d'un nombre d'antennes relativement restreint.

Dans un mode particulier de réalisation, l'au moins un élément émetteur sans fil et/ou récepteur sans fil est un capteur sans fil intégré dans le câble.

Dans un mode particulier de réalisation, au moins une antenne de la pluralité d'antennes est conforme à la norme Bluetooth (marque déposée).

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :

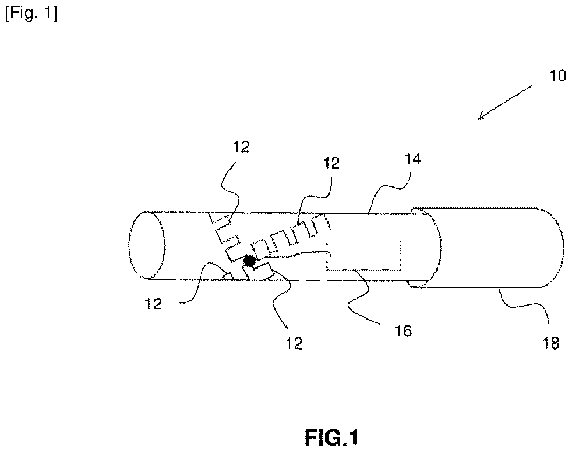

[Fig. 1] est une représentation schématique d'une portion d'un câble conforme à la présente invention, dans un mode particulier de réalisation.

### Description de mode(s) de réalisation

Le câble conforme à la présente invention est un câble électrique destiné par exemple au transport d'énergie et/ou à la transmission de données.

La figure 1 montre un mode particulier de réalisation d'une portion d'un câble 10 conforme à la présente invention.

Le câble 10 comporte au moins un élément émetteur sans fil de signaux et/ou récepteur sans fil de signaux, qui, à titre d'exemple non limitatif, peut être un capteur (non représenté), intégré dans le câble 10, par exemple un capteur de température, ou de courant, ou d'humidité, ces exemples n'étant pas limitatifs.

Conformément à l'invention, le câble 10 comporte en outre une pluralité d'antennes 12 d'émission et/ou de réception. Au moins une des antennes 12 est utilisée par l'élément émetteur et/ou récepteur précité pour communiquer.

La forme des antennes 12 illustrées sur la figure 1 est donnée à titre d'exemple non limitatif. Ces antennes peuvent présenter toute autre forme jugée appropriée.

A titre d'exemple non limitatif, au moins une des antennes de la pluralité d'antennes 12 est conforme à la norme Bluetooth (marque déposée).

Les antennes 12 sont situées sur une couche 14 prédéterminée du câble 10, qui est constituée d'une matière électriquement isolante. A titre d'exemple non limitatif, la matière électriquement isolante peut être une matière plastique telle que PVC, polyéthylène ou silicone ou tout autre isolant électrique.

Les antennes 12 peuvent éventuellement être imprimées directement sur cette couche isolante 14 du câble 10, par exemple par impression métallique, grâce à une encre conductrice appliquée sur l'isolant qui compose la couche isolante 14. Cette encre conductrice peut comporter par exemple une base solvantée et un matériau conducteur comme le graphite, le cuivre ou l'argent, ces exemples n'étant pas limitatifs.

En variante, la couche isolante 14 peut être un ruban de matière électriquement isolante, qui est par exemple enroulé, par exemple hélicoïdalement, autour d'une autre couche prédéterminée du câble 10.

Avantageusement, chaque antenne de la pluralité d'antennes 12 est orientée différemment des autres antennes de la pluralité d'antennes 12, de façon à couvrir le plus de directions possibles d'émission/réception.

A titre d'exemple non limitatif, comme illustré sur la figure 1, la pluralité d'antennes 12 peut comporter quatre antennes disposées suivant une configuration en « X » à partir d'un même point central, le point central étant connecté à un dispositif électronique 16 contenant la circuiterie nécessaire au fonctionnement de la pluralité d'antennes, cette circuiterie étant par exemple disposée à l'intérieur du câble 10. Une telle circuiterie est connue en soi et ne sera donc pas décrite en détail ici.

Dans le mode particulier de réalisation illustré, afin de limiter les risques d'abrasion ou autre endommagement des antennes 12, une fine couche 18 de matière électriquement isolante recouvre la pluralité d'antennes 12 (seule une partie de cette couche 18 est illustrée pour que les antennes 12 soient visibles sur le dessin). Cette couche 18 isolante peut par exemple être formée par légère sur-extrusion du câble 10. La couche 18 isolante a par exemple une épaisseur de quelques centaines de microns, typiquement environ 100 à 400 microns.

Plus généralement, une ou plusieurs couches additionnelles peuvent être prévues au-dessus de la couche isolante 14 sous-jacente sur laquelle est située la pluralité d'antennes 12.

En variante, la couche isolante 14 peut être la paroi extérieure du câble 10.

## Revendications

1. Câble (10) électrique comportant au moins un élément émetteur sans fil et/ou récepteur sans fil de signaux, comportant en outre une pluralité d'antennes (12) d'émission et/ou de réception situées sur une couche électriquement isolante (14) prédéterminée dudit câble (10), ledit au moins un élément émetteur sans fil et/ou récepteur sans fil communiquant par l'intermédiaire d'au moins une antenne de ladite pluralité d'antennes (12), **caractérisé en ce que** chaque antenne de ladite pluralité d'antennes (12) est orientée différemment.

2. Câble (10) selon la revendication 1, **caractérisé en ce que** ladite pluralité d'antennes (12) est réalisée par impression au moyen d'une encre conductrice.

3. Câble (10) selon la revendication 1 ou 2, **caractérisé en ce que** ladite pluralité d'antennes (12) est recouverte d'une couche (18) électriquement isolante.

4. Câble (10) selon la revendication 1 ou 2, **caractérisé en ce que** ladite couche électriquement isolante (14) prédéterminée est la paroi extérieure dudit câble (10).

5. Câble (10) selon l'une quelconque des revendications 1 à 3, **caractérisé en ce que** ladite couche électriquement isolante (14) prédéterminée est un ruban disposé autour d'une autre couche dudit câble (10).

6. Câble (10) selon l'une quelconque des revendications précédentes, **caractérisé en ce que** ladite pluralité d'antennes (12) comporte quatre antennes disposées en « X ».

7. Câble (10) selon l'une quelconque des revendications précédentes, **caractérisé en ce que** ledit au moins un élément émetteur sans fil et/ou récepteur sans fil est un capteur sans fil intégré dans ledit câble (10).

8. Câble (10) selon l'une quelconque des revendications précédentes, **caractérisé en ce qu'**au moins une antenne de ladite pluralité d'antennes (12) est conforme à la norme Bluetooth (marque déposée).

## Patentansprüche

1. Elektrokabel (10), aufweisend mindestens ein drahtloses Signal-Sende- und/oder drahtloses Signal-Empfangselement, aufweisend ferner eine Vielzahl von Sende- und/oder Empfangsantennen (12), die sich auf einer vorher festgelegten elektrisch isolierenden Schicht (14) des Kabels (10) befinden, wobei das mindestens eine drahtlose Sende- und/oder drahtlose Empfangselement über mindestens eine Antenne von der Vielzahl von Antennen (12) kommuniziert, **dadurch gekennzeichnet, dass** jede Antenne von der Vielzahl von Antennen (12) anders ausgerichtet ist.

2. Kabel (10) nach Anspruch 1, **dadurch gekennzeichnet, dass** die Vielzahl von Antennen (12) durch Drucken mittels einer leitenden Tinte hergestellt ist.

3. Kabel (10) nach Anspruch 1 oder 2, **dadurch gekennzeichnet, dass** die Vielzahl von Antennen (12) mit einer elektrisch isolierenden Schicht (18) bedeckt ist.

4. Kabel (10) nach Anspruch 1 oder 2, **dadurch gekennzeichnet, dass** die vorher festgelegte elektrisch isolierende Schicht (14) die Außenwand des Kabels (10) ist.

5. Kabel (10) nach einem der Ansprüche 1 bis 3, **dadurch gekennzeichnet, dass** die vorher festgelegte elektrisch isolierende Schicht (14) ein Band ist, das um eine andere Schicht des Kabels (10) angeordnet ist.

6. Kabel (10) nach einem der vorangehenden Ansprüche, **dadurch gekennzeichnet, dass** die Vielzahl von Antennen (12) vier Antennen aufweist, die als "X" angeordnet sind.

7. Kabel (10) nach einem der vorangehenden Ansprüche, **dadurch gekennzeichnet, dass** das mindestens eine drahtlose Sende- und/oder drahtlose Empfangselement ein drahtloser Sensor ist, der in das Kabel (10) integriert ist.

8. Kabel (10) nach einem der vorangehenden Ansprüche, **dadurch gekennzeichnet, dass** mindestens eine Antenne von der Vielzahl von Antennen (12) der Bluetooth-Norm (eingetragene Marke) entspricht.

## Claims

1. An electric cable (10) including at least one wireless transmitter and/or wireless receiver, further including a plurality of transmission and/or reception antennas (12) located on a predetermined electrically insulating layer (14) of said cable (10), said at least one wireless transmitter and/or wireless receiver communicating by means of at least one antenna of said plurality of antennas (12), **characterized in that** each antenna of said plurality of antennas (12) is oriented differently.

2. The cable (10) according to claim 1, **characterized in that** said plurality of antennas (12) is made by printing using conductive ink.

3. The cable (10) according to claim 1 or 2, **characterized in that** said plurality of antennas (12) is covered by an electrically insulating layer (18).

4. The cable (10) according to claim 1 or 2, **characterized in that** said predetermined electrically insulating layer (14) is the outer wall of said cable (10).

5. The cable (10) according to any one of claims 1 to 3, **characterized in that** said predetermined electrically insulating layer (14) is a tape arranged around another layer of said cable (10).

6. The cable (10) according to any one of the preceding claims, **characterized in that** said plurality of antennas (12) includes four antennas arranged in an "X."

7. The cable (10) according to any one of the preceding claims, **characterized in that** said at least one wireless transmitter and/or wireless receiver is a wireless sensor integrated into said cable (10).

8. The cable (10) according to any one of the preceding claims, **characterized in that** at least one antenna of said plurality of antennas (12) is according to the Bluetooth (registered trademark) standard.
